# EUROPÄISCHE PATENTSCHRIFT

(11) **EP 1 102 042 B1**
(45) Veröffentlichungstag und Bekanntmachung des Hinweises auf die Patenterteilung: **30.06.2010**
(21) Anmeldenummer: 00124865.7
(22) Anmeldetag: 15.11.2000
(51) Int. Cl.: G01F 15/18

(54) **Wasserzähler mit separatem Anschlussstutzen**
Water meter with separate connection piece
Compteur d'eau ayant une pièce de connection à part

(30) Priorität: 18.11.1999 DE 29920282 U; 27.01.2000 DE 10003343
(43) Veröffentlichungstag der Anmeldung: 23.05.2001
(73) Patentinhaber: M & FC Holding LLC, Raleigh, NC 27 615 (US)
(72) Erfinder: Lang, Gerhard Maschinenbautechniker, 67134 Birkenheide (DE)
(74) Vertreter: Patentanwälte Möll, Bitterich & Dr. Keller

(56) Entgegenhaltungen:
- EP-A- 0 882 950
- DE-A- 2 430 040
- DE-A- 19 816 322
- GB-A- 2 321 513
- US-A- 1 997 845
- US-A- 4 809 548

## Beschreibung

Die Erfindung betrifft in Wasserleitungen austauschbar einsetzbare Zähler gemäß dem Oberbegriff des Anspruchs 1.

Wasserzähler sind seit vielen Jahrzehnten in Millionen Stückzahlen weltweit im Einsatz. Ihre wesentlichen Elemente sind ein Zählergehäuse und zwei angeformte Anschlussstutzen, die meist mit einem Schraubgewinde ausgerüstet sind.

Um den Ein- und Ausbau dieser Zähler zu erleichtem, gibt es vorbereitete Einbauplätze. Hier sind die korrespondierenden Anschlusselemente der Wasserleitung so fixiert, dass das Ein- und Ausbauen des auswechselbaren Zählers sehr schnell vor sich geht. Durch exakte Positionierung der Anschlüsse sollte ein weitestgehend spannungsfreier Einbau gewährleistet werden

In der Praxis hat sich jedoch herausgestellt, dass aufgrund von Herstellungstoleranzen, von ungenauen Montagen und dergleichen die Passgenauigkeit leidet, so dass Spannungen im Zählergehäuse erzeugt werden. Besteht das Gehäuse wie in der Vergangenheit üblich aus Messing oder Gusseisen, werden diese Kräfte problemlos aufgenommen. Seit Jahren werden jedoch die Metallgehäuse zunehmend durch Kunststoffgehäuse ersetzt. Kunststoffe aber neigen unter der Einwirkung von Zug-Dauerspannungen zum Fließen. Das Gehäuse verformt sich und wird unter Umständen undicht. Auf jeden Fall leidet die Messgenauigkeit. Aus diesem Grunde werden bisher aus Kunststoff nur sogenannte Kartuschen verwendet, die in ein stabiles, metallisches Basisgehäuse auswechselbar eingesetzt werden, wenn der Einbau in starre Leitungsrohre vorgesehen ist. Man vergleiche beispielsweise die DE-A 41 21 056.5.

Eine weitere, Metall und Kunststoff verwendende Konstruktion ist bekannt aus der DE 297 09 554 U. Diese Schrift offenbart einen Wasserzähler mit einem Metallgehäuse, welches zwei Öffnungen besitzt. In diese Öffnungen sind vom Gehäuseinneren aus die zwei Anschlussstutzen eingesteckt. Diese Anschlussstutzen können aus Metall, bevorzugt aber aus Kunststoff bestehen. In Position werden sie gehalten durch die anschließend von oben eingeführte Messkartusche. Einer der Anschlussstutzen ist mit Hilfe eines O-Rings gegen die Messkartusche flüssigkeitsdicht abgedichtet. Sobald das Zählwerk aufgesetzt und eine Klarsichthaube auf das Metallgehäuse aufgerastet ist, sitzen die Anschlussstutzen unbeweglich im Gehäuse. Bestehen die Anschlussstutzen aus Kunststoff, so ergeben sich im praktischen Einsatz die schon beschriebenen Probleme.

Ist das Leitungsnetz nicht starr, beispielsweise weil es aus Schläuchen besteht, werden gelegentlich auch Wasserzähler mit einem ganz aus Kunststoff hergestellten Gehäuse verwendet.

In Großwasserleitungen ist es bekannt, dem Wasserzähler ein sogenanntes Schiebestück vorzusetzen. Dieses besitzt zwei gegenseitig teleskopierbare Rohre, die eine Längenanpassung ermöglichen. Großwasserzähler besitzen jedoch keine Kunststoffgehäuse. Für normale Hauswasseranschlussleitungen wären Schiebestücke viel zu teuer; sie werden daher auch nicht verwendet.

Der vorliegenden Erfindung liegt die Aufgabe zugrunde, die Gehäuse von Wasserzählern der eingangs genannten Art derart auszugestalten, dass sie direkt und ohne Schiebestücke in die Wasserleitungen eingesetzt werden können und ohne dass das Kunststoffgehäuse durch Spannungen, hervorgerufen beispielsweise durch die Einbautoleranzen, beschädigt wird.

Diese Aufgabe wird gelöst durch einen Wasserzähler mit den Merkmalen des Anspruchs 1.

Die vorliegende Erfindung vermeidet die nachteiligen Auswirkungen von mechanischen Spannungen auf die Kunststoffgehäuse dadurch, dass wenigstens einer der Anschlussstutzen in das Kunststoffgehäuse zwar flüssigkeitsdicht aber ansonsten beweglich eingeschoben ist. Dieser separate Anschlussstutzen kann somit im Rahmen der konstruktiven Gegebenheiten mehr oder weniger tief in die Stutzenöffnung eingeschoben bzw. aus dieser herausgezogen werden. Spannungen werden dabei auf das Gehäuse nicht übertragen.

Gemäß einer Weiterbildung der Erfindung sitzt der separate Anschlussstutzen auch mit radialem Spiel in der Stutzenöffnung. Dadurch hat er die Möglichkeit, Winkelbewegungen auszuführen, wodurch auch derartige Einbautoleranzen problemlos ausgeglichen werden können. Sogar ein leichter axialer Versatz ist ausgleichbar.

Zu dem selben Zweck kann die Stutzenöffnung auch konisch geformt sein. Dann lässt sich der separate Stutzen auch kippen.

Gemäß einer Weiterbildung der Erfindung ist das Anschlussgewinde des separaten Anschlussstutzens zum Einsteckende exzentrisch angeordnet. Dadurch kann ein axialer Versatz zwischen Wasserleitung und Zähler noch besser ausgeglichen werden.

Gemäß einer Ausgestaltung der Erfindung besitzt der Anschlussstutzen einen unrunden, vorzugsweise polygonalen Querschnitt. Dadurch wird verhindert, dass der separate Anschlussstutzen sich gegenüber dem Zählergehäuse verdrehen kann. Dies erleichtert oftmals die Montage und Demontage.

Gemäß einer alternativen Weiterbildung der Erfindung ist der separate Anschlussstutzen in der Stutzenöffnung um seine Längsachse drehbar, wobei der Drehwinkel begrenzt ist. Auch dies gibt die Möglichkeit einer vereinfachten Montage, wobei jedoch die Anpassung an die örtlichen Einbautoleranzen verbessert ist.

Zur Begrenzung des Drehwinkels eignen sich unrunde Querschnitte von Anschlussstutzen und Stutzenöffnung oder auch den Drehwinkel begrenzende Rippen.

Der Anschlussstutzen ist vorzugsweise aus einer Kupferlegierung hergestellt.

Gemäß einer Weiterbildung der Erfindung ist in den ausgangsseitigen Anschlussstutzen ein Rückflussverhinderer integriert. Dieser verhindert, dass beispielsweise bei Arbeiten am städtischen Versorgungsnetz Wasser aus dem Hausanschluss zurückläuft.

Vorzugsweise dichten O-Ringe den separaten Anschlussstutzen gegen das Gehäuse ab. O-Ringe haben sich schon in vielen Bereichen der Technik bestens bewährt. Sie sind preiswert und dauerhaft.

Dank der Entkopplung von Zählergehäuse und Anschlussstutzen kann jetzt auch das gesamte Zählergehäuse aus Kunststoff hergestellt werden, ohne dass die eingangs geschilderten Probleme auftreten.

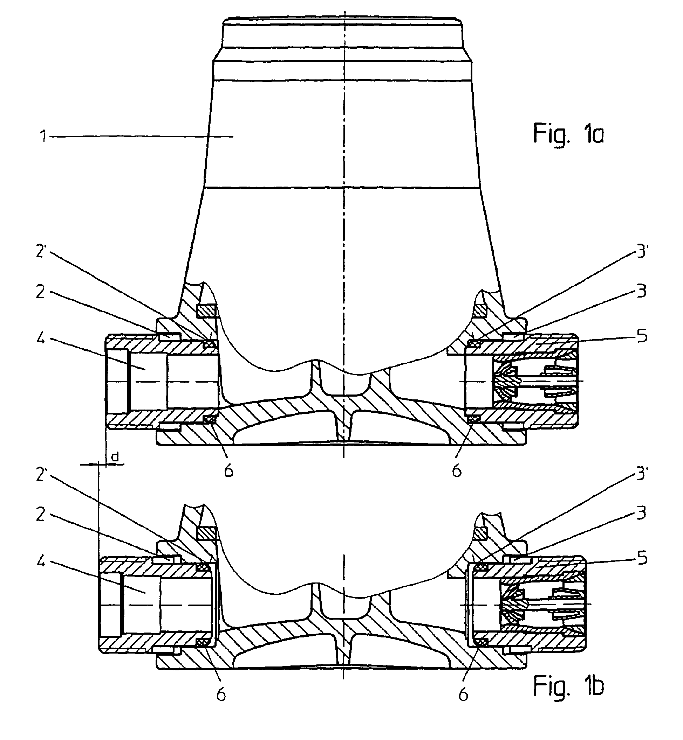

Anhand der Zeichnung soll die Erfindung in Form von Ausführungsbeispielen näher erläutert werden. Es zeigen
Fig. 1a eine teilweise aufgebrochene Seitenansicht eines Wasserzählers mit zwei lose eingeschobenen Anschlussstutzen in ihrer Grundposition,
Fig. 1 b ausschnittsweise den Zähler der Fig. 1a mit teilweise herausgezogenen Anschlussstutzen,
Fig. 2 einen zweiten Wasserzähler mit gekippten, altemativen Anschlussstutzen,
Fig. 3 rein schematisch einen Längsschnitt durch einen exzentrischen Anschlussstutzen und
Fig. 4 einen dritten Wasserzähler.

Fig. 1a zeigt eine teilweise aufgebrochene Seitenansicht eines Wasserzählers. Man erkennt ein druckfestes Kunststoffgehäuse 1, in das eine erste und eine zweite Stutzenöffnung 2, 3 eingeformt sind. Die Stutzenöffnungen 2, 3 besitzen bereichsweise einen unrunden, insbesondere polygonalen, beispielsweise sechseckigen Querschnitt.

In die Stutzenöffnungen 2, 3 sind separate Anschlussstutzen 4, 5 eingesteckt. Die Abdichtung gegen das Gehäuse 1 übernimmt je ein O-Ring 6. Die Stutzenöffnungen 2, 3 bilden an dieser Stelle einen Dichtbereich 2', 3', dessen Abmessungen an die O-Ringe 6 angepasst sind. Dank des polygonalen Querschnitts sind die Anschlussstutzen 4, 5 gegen Verdrehen gesichert, so dass die Verbindung zu der (nicht dargestellten) Wasserleitung mit herkömmlichen Überwurfmuttem hergestellt werden kann.

Fig. 1b zeigt ausschnittsweise den Zähler der Fig. 1a. Die Anschlussstutzen 4, 5 sind um das Maß d aus dem Gehäuse 1 herausgezogen, wobei die Flüssigkeitsdichtigkeit erhalten bleibt. Der in den Fig. 1a und 1b dargestellte Zähler kann somit Abstandstoleranzen der Größe 2d ausgleichen, ohne dass auf das Kunststoffgehäuse 1 irgendwelche Spannungen ausgeübt werden.

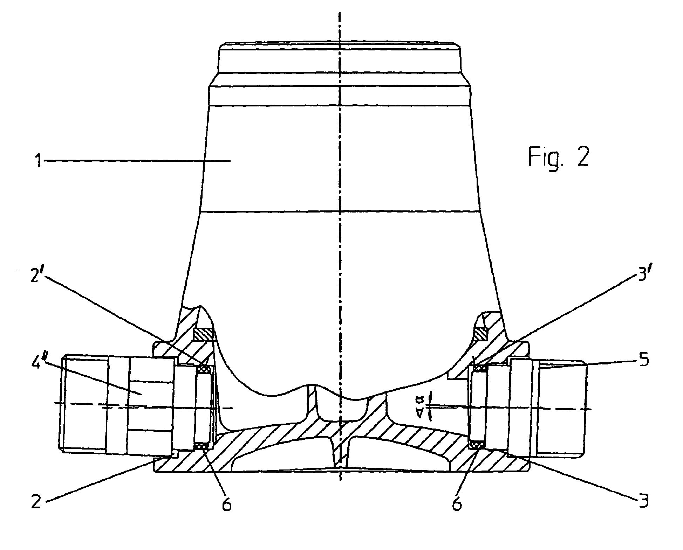

Fig. 2 zeigt einen weiteren Wasserzähler. In das Gehäuse 1 ist links ein längerer Anschlussstutzen 4" eingedichtet. So können mit einem einzigen Zählergehäuse 1 die unterschiedlichsten Einbausituationen bewältigt werden, indem Stutzen 4, 4", 5 mit geeigneter Länge verwendet werden. Der Querschnitt der in das Kunststoffgehäuse 1 eingeformten Stutzenöffnungen 2, 3, nicht jedoch der der Dichtbereiche 2', 3', ist um ein gewisses Maß größer als der der Anschlussstutzen 4", 5. Auch können die Stutzenöffnungen 2, 3 konisch ausgebildet sein. Dadurch kann die Mittelachse der Stutzen 4", 5 gegen die Mittelachse der Stutzenöffnungen 2, 3 um den Winkel a gekippt werden, ohne dass Spannungen auf das Kunststoffgehäuse 1 ausgeübt werden. Gleichzeitig können die Stutzen 4", 5 auch um das Maß d (Fig. 1a und 1b) aus dem Kunststoffgehäuse 1 herausgezogen werden, so dass auch komplexe Einbautoleranzen problemlos ausgeglichen werden können.

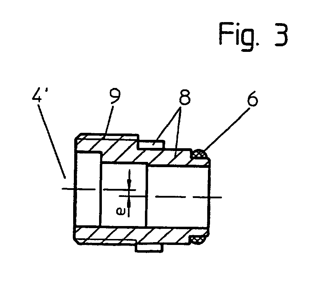

Fig. 3 zeigt als Längsschnitt einen Anschlussstutzen 4', bei dem das Anschlussgewinde 9 um das Maß e exzentrisch zum Einsteckende 8 angeordnet ist. Durch Drehen des Anschlussstutzens 4' in der entsprechenden Stutzenöffnung kann auch ein größerer Achsversatz zwischen Gehäuse 1 und Wasserleitung problemlos ausgeglichen werden.

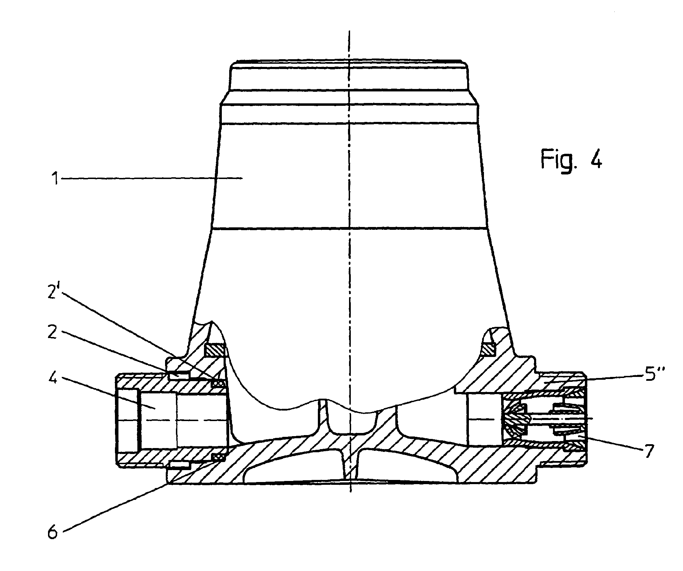

Fig. 4 schließlich zeigt einen dritten Wasserzähler. Dessen Kunststoffgehäuse 1 besitzt rechts einen einstückig angeformten Stutzen 5". Dadurch sitzt der Zähler später fest in der Leitung. Der Toleranzausgleich und die Vermeidung der Spannungen im Zählergehäuse 1 wird allein durch den beweglichen Anschlussstutzen 4 bewirkt.

## Patentansprüche

1. Wasserzähler zum austauschbaren Einbau in einen vorbereiteten Einbauplatz, im wesentlichen umfassend
- ein druckfestes Zählergehäuse (1),
- wenigstens eine Stutzenöffnung (2, 3) im Gehäuse (1),
- wenigstens einen separaten Anschlussstutzen (4, 4', 4", 5), eingesetzt in die Stutzenöffnung (2, 3),
- und höchstens einen festen Anschlussstutzen (5"),
**gekennzeichnet durch** die Merkmale:
- die Stutzenöffnung (2, 3) besitzt einen innenliegenden Dichtbereich (2', 3'),
- der separate Anschlussstutzen (4, 4', 4", 5) ist
- von außen in die Stutzenöffnung (2, 3) eingeschoben,
- in der Stutzenöffnung um ein gewisses Maß (d) axial verschiebbar
- und zum Dichtbereich (2', 3') flüssigkeitsdicht abgedichtet

2. Wasserzähler nach Anspruch 1, **gekennzeichnet durch** das Merkmal:
- der separate Anschlussstutzen (4, 4', 4", 5) sitzt mit radialem Spiel in der Stutzenöffnung (2, 3).

3. Wasserzähler nach Anspruch 1 oder 2, **gekennzeichnet durch** die Merkmale:
- die Stutzenöffnung (2, 3) ist konisch geformt,
- der separate Anschlussstutzen (4, 4', 4", 5) ist darin kippbar.

4. Wasserzähler nach einem der Ansprüche 1 bis 3, **gekennzeichnet durch** das Merkmal:
- das Anschlussgewinde (9) des separaten Anschlussstutzens (4') ist zum Einsteckende (8) exzentrisch angeordnet.

5. Wasserzähler nach einem der Ansprüche 1 bis 4, **gekennzeichnet durch** das Merkmal:
- der separate Anschlussstutzen (4, 4', 4", 5) besitzt einen unrunden, vorzugsweise polygonalen Querschnitt.

6. Wasserzähler nach einem der Ansprüche 1 bis 5, **gekennzeichnet durch** die Merkmale.
- der separate Anschlussstutzen (4, 4', 5) ist in der Stutzenöffnung (2, 3) um seine Längsachse drehbar,
- der Drehwinkel ist begrenzt.

7. Wasserzähler nach einem der Ansprüche 1 bis 6, **gekennzeichnet durch** das Merkmal:
- ein O-Ring (6) dichtet den Anschlussstutzen (4, 4', 4", 5) gegen das Gehäuse (1) ab.

8. Wasserzähler nach einem der Ansprüche 1 bis 7, **gekennzeichnet durch** das Merkmal:
- der separate Anschlussstutzen (4, 4', 4", 5) ist aus einer Kupferlegierung hergestellt.

9. Wasserzähler nach einem der Ansprüche 1 bis 8, **gekennzeichnet durch** das Merkmal.:
- in den ausgangsseitigen Anschlussstutzen (5, 5") ist ein Rückflussverhinderer (7) integriert.

10. Wasserzähler nach einem der Ansprüche 1 bis 9, **gekennzeichnet durch** das Merkmal:
- das Zählergehäuse (1) besteht aus Kunststoff.

## Claims

1. A water meter for replaceable installation in a prepared installation site, essentially comprising
- a pressure-resistant meter housing (1),
- at least one nozzle opening (2,3) in the housing (1),
- at least one separate connector nozzle (4,4',4",5) inserted into the nozzle opening (2,3),
- and not more than one fixed connector nozzle (5"),
**characterised by** the features:
- the nozzle opening (2,3) has an internal sealing region (2',3'),
- the separate connector nozzle (4,4',4",5) is
- inserted from the outside into the nozzle opening (2,3),
- is axially displaceable by an amount (d) in the nozzle opening
- and is sealed fluidtightly relative to the sealing region (2',3').

2. A water meter according to Claim 1, **characterised by** the feature:
- the separate connector nozzle (4,4',4",5) is seated with radial clearance in the nozzle opening (2,3).

3. A water meter according to Claim 1 or 2, **characterised by** the features:
- the nozzle opening (2,3) is conically shaped,
- the separate connector nozzle (4,4',4",5) can be tilted therein.

4. A water meter, according to any one of Claims 1 to 3, **characterised by** the feature:
- the connector thread (9) of the separate connector nozzle (4') is arranged off-centre relative to the insert end (8).

5. A water meter according to any one of Claims 1 to 4, **characterised by** the feature:
- the separate connector nozzle (4,4',4",5) is of non-circular, preferably polygonal cross-section.

6. A water meter according to any one of Claims 1 to 5, **characterised by** the features:
- the separate connector nozzle (4,4',5) is rotatable about its longitudinal axis in the nozzle opening (2,3),
- the angle of rotation is limited.

7. A water meter according to any one of Claims 1 to 6, **characterised by** the feature:
- an O-ring (6) seals the connector nozzle (4,4',4",5) with respect to the housing (1).

8. A water meter according to any one of Claims 1 to 7, **characterised by** the feature:
- the separate connector nozzle (4,4',4",5) is made of a copper alloy.

9. A water meter according to any one of Claims 1 to 8, **characterised by** the feature:
- a backflow preventer (7) is integrated into the connector nozzle (5,5") on the output side.

10. A water meter according to any one of Claims 1 to 9, **characterised by** the feature:
- the meter housing (1) consists of plastics material.

## Revendications

1. Compteur d'eau conçu pour l'encastrement remplaçable dans un lieu d'intégration apprêté, comprenant pour l'essentiel
- un carter (1) tenant la pression,
- au moins un orifice de branchement (2, 3) pratiqué dans ledit carter (1),
- au moins un embout distinct de raccordement (4, 4', 4", 5), inséré dans ledit orifice de branchement (2, 3),
- et, au maximum, un embout fixe de raccordement (5"),
**caractérisé par** les particularités suivantes :
- l'orifice de branchement (2, 3) possède une zone d'étanchement (2', 3') occupant une position intérieure,
- l'embout distinct de raccordement (4, 4', 4", 5)
- est introduit de l'extérieur dans l'orifice de branchement (2, 3),
- peut coulisser axialement selon une certaine cote (d) dans ledit orifice de branchement
- et est isolé, avec étanchéité aux liquides, vis-à-vis de la zone d'étanchement (2', 3').

2. Compteur d'eau selon la revendication 1, **caractérisé par** la particularité suivante :
- l'embout distinct de raccordement (4, 4', 4", 5) est logé avec jeu radial dans l'orifice de branchement (2, 3).

3. Compteur d'eau selon la revendication 1 ou 2, **caractérisé par** les particularités suivantes :
- l'orifice de branchement (2, 3) est de forme tronconique,
- l'embout distinct de raccordement (4, 4', 4", 5) peut basculer dans ledit orifice.

4. Compteur d'eau selon l'une des revendications 1 à 3, **caractérisé par** la particularité suivante :
- le taraudage de jonction (9) de l'embout distinct de raccordement (4') occupe une position excentrée par rapport à l'extrémité d'emboîtement (8).

5. Compteur d'eau selon l'une des revendications 1 à 4, **caractérisé par** la particularité suivante :
- l'embout distinct de raccordement (4, 4', 4", 5) offre une section transversale non circulaire, de préférence polygonale.

6. Compteur d'eau selon l'une des revendications 1 à 5, **caractérisé par** les particularités suivantes :
- l'embout distinct de raccordement (4, 4', 5) peut tourner autour de son axe longitudinal dans l'orifice de branchement (2, 3),
- l'angle de rotation est limité.

7. Compteur d'eau selon l'une des revendications 1 à 6, **caractérisé par** la particularité suivante :
- une bague torique (6) assure l'étanchéité de l'embout de raccordement (4, 4', 4", 5) vis-à-vis du carter (1).

8. Compteur d'eau selon l'une des revendications 1 à 7, **caractérisé par** la particularité suivante :
- l'embout distinct de raccordement (4, 4', 4", 5) est fabriqué en un alliage de cuivre.

9. Compteur d'eau selon l'une des revendications 1 à 8, **caractérisé par** la particularité suivante :
- un inhibiteur de reflux (7) est incorporé dans l'embout de raccordement (5, 5") situé côté sortie.

10. Compteur d'eau selon l'une des revendications 1 à 9, **caractérisé par** la particularité suivante :
- le carter (1) dudit compteur consiste en une matière plastique.
